# EUROPEAN PATENT SPECIFICATION

(11) **EP 3 798 049 B1**
(45) Date of publication and mention of the grant of the patent: **17.12.2025**
(21) Application number: 19205216.5
(22) Date of filing: 24.10.2019
(51) Int. Cl.: B60N 2/14

(54) **MANIPULATION ASSEMBLY FOR SAFETY SEAT BASE, AND SAFETY SEAT BASE, KIT AND MANIPULATION METHOD**
MANIPULATIONSANORDNUNG FÜR EINE SICHERHEITSSITZBASIS SOWIE SICHERHEITSSITZBASIS, KIT UND MANIPULATIONSVERFAHREN
ENSEMBLE DE MANIPULATION POUR UNE BASE DE SIÈGE DE SÉCURITÉ ET BASE DE SIÈGE DE SÉCURITÉ, KIT ET PROCÉDÉ DE MANIPULATION

(30) Priority: 27.09.2019 CN 201910926040
(43) Date of publication of application: 31.03.2021
(73) Proprietor: Transtek Industries (HK) Limited, Jordan, Kowloon (HK)
(72) Inventor: Huang, Qunsheng, Kowloon (HK)
(74) Representative: Cabinet Chaillot

(56) References cited:
- EP-A1- 2 295 287
- US-A- 4 762 364

## Description

### FIELD OF THE INVENTION

The invention belongs to the technical field of car safety seats, and particularly relates to a manipulation assembly applicable to a safety seat base, a safety seat base with the manipulation assembly and a safety seat kit comprising the base, and a safety seat manipulation method based thereon.

### BACKGROUND OF THE INVENTION

With the economic and social development, cars are increasingly entering people's lives and becoming indispensable tools for people to go out and travel. Car seat belts are mainly designed for adults and therefore cannot be well suited for children, and children are also more vulnerable than adults. Therefore, the laws and regulations of all countries stipulate that children under the age of 12 need to fasten safety seats when riding in cars (in the invention, the safety seat is a general term for a sit-up safety seat and a carrier-type safety seat).

The main technology of the existing safety seats is relatively mature, and the improvement mainly focuses on the material, structure, function, etc. For example, CN105034873A discloses a child safety seat with 360-degree rotation and pitch angle adjustment, which is mainly intended to innovate the connection structure between the seat and the base so that the safety seat is imparted with angle rotation adjustment and seat pitch adjustment functions; EP2295287A1 discloses a fixing base for a child car seat. In order to make the safety seat rotatable so that the safety seat can be installed freely or the placement of children is more convenient, an attachment support 70 is installed in a circular central opening 51 on an elongated shaped protection plate 50 through a ring support 60; in order to make the base applicable to different depth of car seats, a main casing 10 is designed to be composed of a casing base 20 and a casing extension 30 that can slide with each other; in order to solve safety issues caused by the accessibility of the unlock button during the use of the safety seat, through corresponding structure design, an unlocking handle 73, which is used to unlock safety seat to make it separated from the base, could be in a completely inaccessible state to avoid the safety issues caused by being accidentally opened when a car seat 200 is in a specific position.

From birth to 12 years old, children are constantly growing up, and therefore need to use different sizes of safety seats at different stages in principle, and in fact, safety seats for different ages are available; however, the existing safety seats are generally sold as a whole, and if divided by age, children need to replace 4-5 seats during their growth, so the overall cost is higher.

Accordingly, if safety seats can be designed in a split manner, and a universal base is developed and equipped with different types or sizes of seat body assemblies, cost can be controlled while enhancing safety.

### SUMMARY OF THE INVENTION

An object of the invention is to provide a manipulation assembly for a safety seat base, a safety seat base with the manipulation assembly and a safety seat kit comprising the base, and a safety seat manipulation method based thereon so as to overcome the disadvantages in cost and safety brought about by the integration of an existing safety seat.

As a first aspect of the invention according to claim 1, a manipulation assembly for a safety seat base is provided, which comprises a seat fixing device for fixed connection to a body frame assembly of the base and a manipulation mechanism for controlling the working state of the seat fixing device. The seat fixing device comprises a pedestal and a seat fixing member disposed thereon, wherein the pedestal is fitted on the body frame assembly.

The manipulation mechanism comprises an actuating member and a connecting member, wherein the connecting member connects the actuating member and the seat fixing member, so that the seat fixing member is driven by the actuating member to be opened or closed to allow a seat assembly to be fitted therein or disengaged therefrom.

The pedestal is rotatably disposed, the seat manipulation assembly further comprises a rotation control assembly capable of controlling the rotation of the pedestal, and the rotation control assembly has a locked state and an unlocked state, the pedestal is rotatable relative to a fixing seat in the unlocked state, and the rotation of both components is inhibited in the locked state.

Preferably, the rotation control assembly comprises a first limiting member and a second limiting member that cooperate with each other, and are respectively arranged on the pedestal and the body frame assembly; and the rotation of the pedestal is locked when both members cooperate, while the pedestal is rotatable on the body frame assembly when both members are disengaged.

Further, several said second limiting members are provided, and spacedly disposed on the pedestal at a set angle; and only one first limiting member is provided, and disposed on the actuating member and actuated therewith.

According to the invention, the actuating member comprises a driving member, a driven member and a function selection member, wherein the driving member and the driven member can be displaced in the same direction, but are not directly connected, the function selection member is disposed on the driving member and has a first state and a second state, and the driving member is disengaged from the driven member in the first state and connected to the driven member in the second state.

Further, the function selection member comprises a body selection member, an elastic member and a selection connection member, wherein the selection connection member is fixedly connected to the driving member, and both ends of the elastic member respectively cooperate with the body selection member and the selection connection member; therefore, the body selection member only cooperates with the driving member in an initial situation, and then is pressed to be displaced downward to cooperate with the driven member, so that the driving member and the driven member are actuated together. Of course, the above description is a preferred embodiment of the function selection member. In fact, only the body selection member of the three members is essential.

Preferably, the first limiting member is disposed on the driving member and actuated therewith, and the connecting member is connected to the driven member; and then the driven member and the pedestal are respectively provided with a third limiting member and a fourth limiting member, and the collaborative working state (cooperating state) of the first limiting member and the second limiting member is opposite to that of the third limiting member and the fourth limiting member.

Further, the fourth limiting member and the second limiting member are oppositely disposed on the pedestal, and the third limiting member is correspondingly disposed on the driven member; therefore, when the driven member is displaced relative to the pedestal, the first limiting member is disengaged from the second limiting member and the third limiting member is fitted into the fourth limiting member, or the first limiting member is fitted into the second limiting member and the third limiting member is disengaged from the fourth limiting member.

Preferably, the seat fixing device further comprises a fixing seat that is fixedly arranged on the body frame assembly; wherein the fixing seat is provided with a rotation guide member and the pedestal is rotatably fitted on the fixing seat; and the body frame assembly comprises a pedestal fixing block that is provided with a bayonet. Or alternatively, the seat fixing device further comprises a fixing seat that is fixedly connected to the pedestal, and the body frame assembly comprises a pedestal fixing block that is provided with several bayonets; and the fixing seat and the pedestal are rotatably disposed in the respective bayonets relative to the body frame assembly.

Preferably, the seat fixing member comprises a first seat fixing member and a second seat fixing member, wherein a middle part of the second seat fixing member is hinged on the first seat fixing member, one end thereof is formed as a seat fixing mechanism in cooperation with the first seat fixing member or separately, and the other end thereof is formed as a connecting end for connecting the manipulation mechanism (i.e. for connecting the connecting member), thereby controlling the opening or closing of the seat fixing mechanism by driving the movement of the connecting end.

Preferably, the actuating member is disposed in a reciprocally displaceable manner to drive the opening or closing of the seat fixing member via the connecting member; or the actuating member is rotatably disposed or centrally hinged to drive the opening or closing of the seat fixing member via the connecting member.

Preferably, the first limiting member and/or the third limiting member are limiting posts; and the second limiting member and/or the fourth limiting member are limiting holes.

As a second aspect of the invention, a safety seat base is provided, which comprises a body, and a seat manipulation assembly and an interface connection assembly fitted on the body, wherein the interface connection assembly is used for connecting an in-vehicle safety seat interface; and the seat manipulation assembly is any manipulation assembly for a safety seat base as described above. More preferably, the safety seat base further comprises a support assembly for contacting the vehicle floor to provide a supporting force.

Further, the body comprises a seat connection member for a seat assembly to be disposed, and a body frame assembly for overall load bearing; the interface connection assembly and the support assembly are respectively fixedly connected to the body frame assembly; the seat connection member is fixedly connected to the pedestal to rotate therewith; and more preferably, the seat connection member is provided with a connecting port, and the seat fixing member is fitted into the connecting port.

Preferably, the actuating member of the seat manipulation assembly is disposed on a front side of a front end of the base.

Preferably, the body further comprises an upper housing and a lower housing for integral formation, wherein the upper housing and the lower housing are fitted outside the body frame assembly so that the base is integrally housed and enclosed thereby.

As a third aspect of the invention, a safety seat kit is provided, which comprises a base and a seat assembly fitted thereon; wherein the base is any safety seat base as described above; and a connection mechanism is arranged at the bottom of the seat assembly, and the connection mechanism comprises a connecting rod that cooperates with the seat fixing member of the safety seat base.

Preferably, the seat assembly includes a safety seat and a carrier.

As a fourth aspect of the invention according to claim 9, a safety seat manipulation method is provided, which uses any manipulation assembly, base or kit as described above, and specifically comprises the steps of:
configuring a safety seat assembly to comprise a safety seat base and a seat assembly, wherein the seat assembly is a carrier and/or a safety seat; and configuring the safety seat base to comprise a seat fixing device and a manipulation mechanism, wherein the seat fixing device is used for fixed connection to a body frame assembly of the base, and the manipulation mechanism is used for controlling the working state of the seat fixing device to control the engagement or disengagement of the seat assembly and the base; and
configuring the seat fixing device to further comprise a pedestal fitted on the body frame assembly of the base and a seat fixing member disposed on the pedestal, and configuring the manipulation mechanism to further comprise an actuating member and a connecting member, wherein the seat fixing member is openable or closable to allow the seat assembly to be fitted therein or disengaged therefrom; and
upon engagement, the actuating member is manipulated for actuation to drive the connecting member to move, so that the seat fixing member is driven open and the seat assembly is fitted into the seat fixing member; and upon disengagement, the actuating member is manipulated for actuation, so that the seat fixing member is opened and the seat assembly is disengaged from the seat fixing member.

Preferably, the actuating member is disposed in a reciprocally displaceable manner to drive the opening or closing of the seat fixing member via the connecting member.

Further, the pedestal is rotatably disposed, and the seat manipulation assembly further comprises a rotation control assembly capable of controlling the rotation of the pedestal; and the rotation control assembly has a locked state and an unlocked state, the pedestal is rotatable relative to a fixing seat in the unlocked state, and the rotation of both components is locked in the locked state.

The rotation control assembly comprises a first limiting member and a second limiting member that cooperate with each other, and are respectively arranged on the pedestal and the body frame assembly; and the rotation of the pedestal is locked when both members cooperate, while the pedestal is rotatable on the body frame assembly when both members are disengaged.

Further, the first limiting member or the second limiting member on the body frame assembly is disposed on the actuating member to indirectly cooperate via the actuating member.

The actuating member is configured to comprise a driving member, a driven member and a function selection member, wherein the driven member and the driving member are actuated together when connected, and the function selection member is disposed on the driving member and has two adjustable states, i.e. a first state and a second state; and the driving member is disengaged from the driven member in the first state and connected to the driven member in the second state.

The driven member is disengaged from the driving member in the first state, and the actuation of the driving member only drives the first limiting member to be actuated and cannot drive the connecting member to move accordingly; and the driven member is engaged with the driving member in the second state, and the actuation of the driving member can allow the connecting member to be actuated together.

Further, the first limiting member is configured to be disposed on the driving member and the connecting member is connected to the driven member, then the driven member and the pedestal are respectively provided with a third limiting member and a fourth limiting member, and the collaborative working state (cooperating state) of the first limiting member and the second limiting member is opposite to that of the third limiting member and the fourth limiting member.

The driven member is disengaged from the driving member in the first state, and the actuation of the driving member only drives the first limiting member or the second limiting member to be actuated and cannot drive the connecting member to be actuated, thereby controlling the engagement or disengagement of the first limiting member and the second limiting member; and the driven member is engaged with the driving member in the second state, the actuation of the driving member can allow the connecting member to be actuated together, the cooperating state of the third limiting member and the fourth limiting member is opposite to that of the first limiting member and the second limiting member, the rotation of the pedestal is always locked, and the displacement of the driven member can only drive the seat fixing member to be unlocked.

Preferably, the actuating member is rotatably disposed or centrally hinged instead to drive the opening or closing of the seat fixing member via the connecting member.

Preferably, the seat fixing member is configured to comprise a first seat fixing member and a second seat fixing member, wherein a middle part of the second seat fixing member is hinged on the first seat fixing member, one end thereof is formed as a seat fixing mechanism in cooperation with the first seat fixing member or separately, and the other end thereof is formed as a connecting end for connecting the manipulation mechanism.

The manipulation assembly for a safety seat base according to the invention provides a detachable connection mode by which a seat body is connected thereto, so that the base is universal and can match different types or sizes of seat bodies. To enhance the actual use, the manipulation assembly also has a rotation function to allow the adjustment of the seat orientation and can be mounted or demounted on the seat body, or to adjust the orientation of the seat body when a child is fastened and unfastened upon seating so as to facilitate adult operation. Moreover, the safety seat of the invention is also very convenient to operate, the rotation function can be unlocked by operating the driving member, and the disassembly function can be unlocked when the rotation function is locked by pressing the function selection member while operating the driving member. Accordingly, the manipulation assembly is very convenient and practical. The safety seat base and the safety seat kit of the invention also have the above functions accordingly.

In addition, the invention also provides a safety seat manipulation method based on the above manipulation assembly, which is convenient to operate and has practical functions.

### BRIEF DESCRIPTION OF THE DRAWINGS

FIG. 1 is a schematic view showing the cooperation between a manipulation assembly for a safety seat base and a chassis in an embodiment of the invention;
FIG. 2 is a first schematic view showing the main structure of the manipulation assembly of the embodiment of FIG. 1;
FIG. 3 is a second schematic view showing the main structure of the manipulation assembly of the embodiment of FIG. 1;
FIG. 4 is a schematic structural view of a manipulation mechanism of the embodiment of FIG. 1;
FIG. 5 is a schematic view showing the cooperation of a driving member of the embodiment of FIG. 1;
FIG. 6 is a schematic exploded view of FIG. 5;
FIG. 7 is a schematic structural exploded view of a first embodiment of a pedestal of the invention which is rotatably disposed;
FIG. 8 is a schematic structural exploded view of a second embodiment of the pedestal of the invention which is rotatably disposed;
FIG. 9 is a schematic structural exploded view of a seat fixing member of the embodiments of FIGS. 7 and 8;
FIG. 10 is a schematic structural view of a base of another embodiment of the invention;
FIG. 11 is a schematic structural exploded view of the embodiment of FIG. 10;

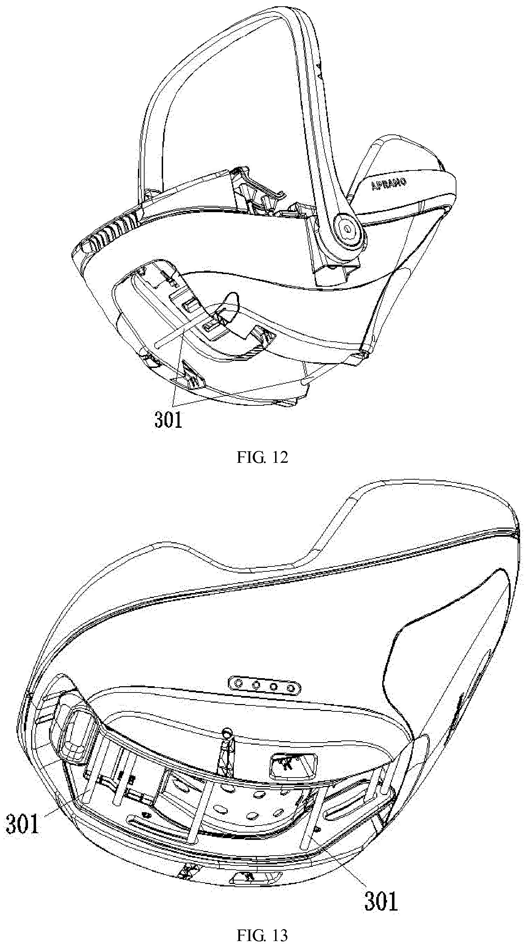

FIG. 12 is a schematic structural view showing the bottom of a carrier of an embodiment of the invention; and
FIG. 13 is a schematic structural view showing the bottom of a seat of another embodiment of the invention.

### DETAILED DESCRIPTION OF THE INVENTION

In order that those skilled in the art better understand the invention to define the claimed scope of the invention more clearly, the invention will be described below in detail with reference to some particular embodiments of the invention. It should be noted that the following description only refers to some particular embodiments within the inventive concept, which are only part of the embodiments of the invention, wherein the detailed direct description of the related structures is only for the convenience of understanding the invention, and various specific features do not certainly and directly define the implementation range of the invention.

A manipulation assembly applicable to a safety seat base comprises a seat fixing device and a manipulation mechanism, wherein the seat fixing device is used for fixed connection to a body frame assembly 106 of the base to meet the requirements on the connection strength of a seat assembly and a base bearing frame so as to ensure safety; and the manipulation mechanism is used for controlling the working state of the seat fixing device, e.g. controlling its opened or closed state to control the engagement or disengagement of the seat assembly and the base, or has other additional functions. The seat assembly is a general term for various forms of child car safety seats, including: carriers for younger infants, safety seats for older children and the like. The body frame assembly 106 is not a component of the manipulation assembly, and is introduced just to describe the cooperating state of the seat fixing device.

The seat fixing device further comprises a pedestal 121 and a seat fixing member 122 disposed on the pedestal 121, wherein the pedestal 121 is directly or indirectly fitted on the body frame assembly 106 borne by the base, and the seat fixing member 122 is openable or closable to allow the seat assembly to be fitted therein or disengaged therefrom; i.e. the seat assembly is connected to the base bearing frame via the seat fixing member 122 and the pedestal 121, and the seat fixing member 122 has opened and closed states; in the opened state, the seat assembly can be disengaged therefrom for its removal, replacement, etc.; and in the closed state, the seat assembly is firmly fixed to the base.

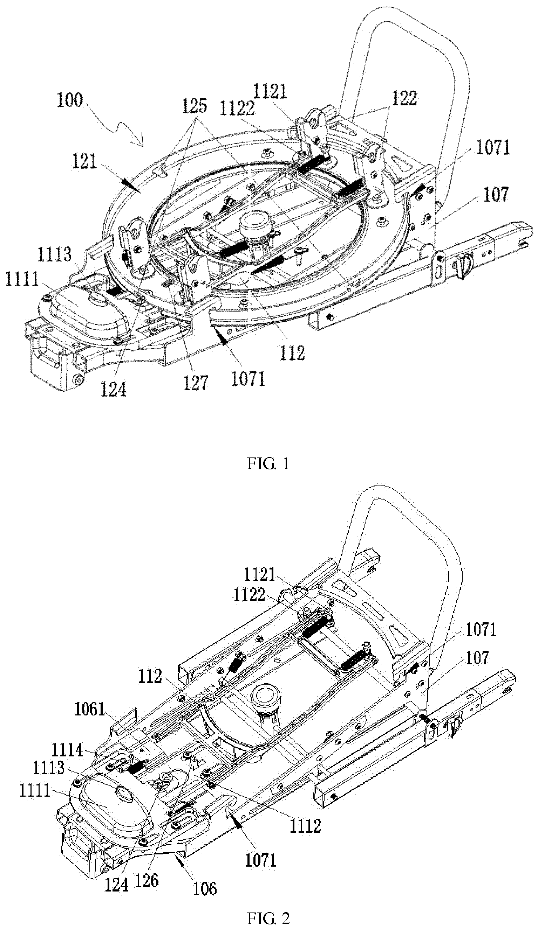

The manipulation mechanism further comprises an actuating member 111 and a connecting member 112, wherein the connecting member 112 directly or indirectly connects the actuating member 111 and the seat fixing member 122, so that the seat fixing member 122 is driven by the actuating member 111 to be opened or closed, thereby controlling the seat fixing device. For example, as shown in FIGS. 1 to 4, the connecting member 112 has four connecting ends to respectively connect the seat fixing member 122 so as to drive the opening or closing of the seat fixing member; and the connecting member 112 is fitted on the pedestal 121 in a reciprocating manner, and comprises a spring 1122 and a spring post 1121, wherein the spring post 1121 is fixed to the pedestal 121, and both ends of the spring 1122 are respectively connected to a body of the connecting member 112 and the spring post 1121. Therefore, the seat fixing member 122 is closed in an initial state, while the seat fixing member 122 is opened after the connecting member 112 is driven by the actuating member 111 to be displaced, and then automatically closed under the action of the spring 1122 after the external force is removed.

In addition to the above connection and disengagement functions, the safety seat base has a rotation control function. Accordingly, the pedestal 121 is rotatably disposed on the body frame assembly 106, and the seat manipulation assembly 100 further comprises a rotation control assembly capable of controlling the rotation of the pedestal 121. The rotation control assembly has a locked state and an unlocked state, the pedestal 121 is rotatable relative to a fixing seat 123 in the unlocked state, and the rotation of both components is locked in the locked state.

Preferably, the rotation control assembly may further comprise a first limiting member 124 and a second limiting member 125 that cooperate witch each other, and are respectively arranged on the pedestal 121 and the body frame assembly 106; and the rotation of the pedestal 121 is locked when both members cooperate, while the pedestal 121 is rotatable on the body frame assembly 106 when both members are disengaged. When the first limiting member 124 is disposed on the body frame assembly 106, both direct fit and indirect fit via other components are possible in principle. Preferably, the first limiting member is disposed on the actuating member 111 to enable indirect fit thereby, so that both disengagement and rotation functions of the seat assembly on the base can be controlled simultaneously by one actuating member 111 (of course, the disengagement and rotation functions can also be controlled separately by different components). For example, the first limiting member 124 and the second limiting member 125 are respectively a limiting post disposed on the actuating member 111 and a limiting hole disposed on the pedestal 121. When the limiting post is fitted into the limiting hole, the rotation of the pedestal 121 is of course locked thereby. Most preferably, several limiting holes 125 are disposed on the pedestal 121, the limiting holes 125 are spacedly disposed at a set angle, e.g. spacedly and uniformly disposed on the pedestal 121 at 90° (of course, other numbers or angles are also possible); and the limiting post 124 can be disposed in a manner that is displaced toward or away from the pedestal 121, so that the rotation of the pedestal 121 can be controlled when the limiting post 124 is fitted into the limiting hole 125. The actuating member 111 and the body frame assembly 106 are also provided with a return spring so that the actuating member 111 can be automatically reset.

In the above embodiment, both the locking and disengagement of the seat assembly and the base, and the locking and unlocking of the rotation of the seat assembly on the base are controlled by the actuating member 111, which may cause some troubles in use, i.e. the rotation is also unlocked when the disengagement function is unlocked, which may cause operational inconvenience. To solve this problem, the actuating member 111 can be configured to comprise a driving member 1111, a driven member 1112 and a function selection member 1113, wherein the driving member 1111 and the driven member 1112 are displaced in the same direction, but are not directly connected, so that the driven member 1112 and the driving member 1111 can be actuated together when necessary, and the function selection member 1113 is disposed on the driving member 1111 and has two adjustable states, i.e. a first state and a second state; and the driving member is disengaged from the driven member 1112 in the first state and connected to the driven member 1112 in the second state. Accordingly, the driven member 1112 is disengaged from the driving member 1111 in the first state, and actions such as displacement of the driving member 1111 cannot drive the connecting member 112 to move accordingly; and the driven member 1112 is engaged with the driving member 1111 in the second state, and actions such as displacement of the driving member 1111 can allow the connecting member 112 to move together.

For example, a telescopic (or adjustable) function selection member 1113 is disposed on the driving member 1111 that is not directly connected to the driven member 1112; and the function selection member 1113 is not connected in any manner to the driven member 1112 in an original contracted state (i.e. the first state), but extends to connect the driving member 1111 and the driven member 1112 in an extended state (i.e. the second state), so that the driven member 1112 is driven by the driving member 1111 to be displaced therewith. Moreover, the first limiting member 124 is arranged on the driving member 1111 and the connecting member 112 is connected to the driven member 1112, so that the operation of the driving member 1111 can only control the opening/closing of locking or rotation when the function selection member 1113 is not pressed (i.e. in the first state), and the driven member can be operated after the function selection member is pressed (i.e. in the second state). Of course, reverse arrangement is also feasible.

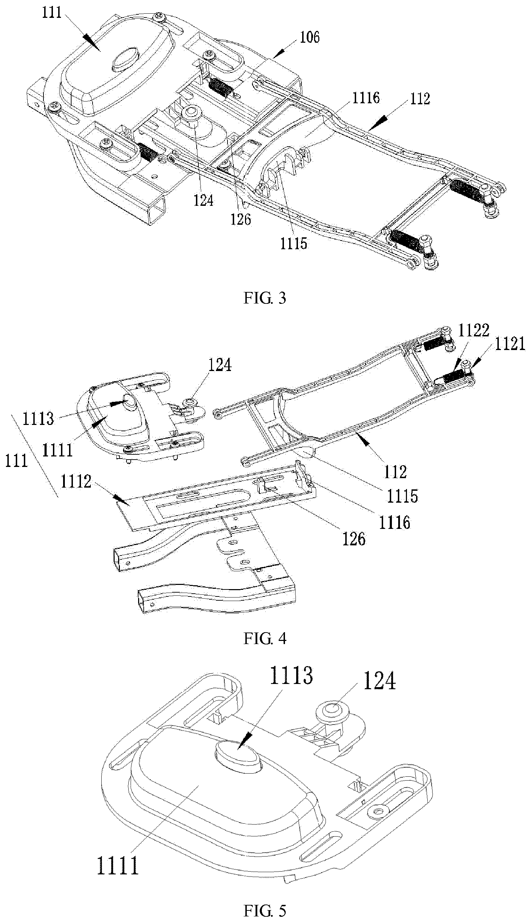

As shown in FIG. 2, a return spring 1114 is arranged between the driving member 1111 and a positioning piece 1061 on the body frame assembly 106, so that the first limiting member 124 on the driving member 1111 is fitted into the second limiting member 125 on the pedestal 121 in an initial situation, ensuring that rotation is locked by default; and unlocking is performed by forcing the driving member 1111 to be displaced when needed, and the driving member 1111 can be reset under the action of the return spring 1114 after the external force is removed. Since the connecting member 112 rotates together with the pedestal 121, the connecting member 112 and the driven member 1112 (or the actuating member 111) should not be rigidly connected. A feasible scheme is as shown in FIGS. 2 to 4, a first connecting piece 1116 is disposed on the connecting member 112, a second connecting piece 1115 is disposed on the driven member 1112, and the second connecting piece 1115 cooperates with the first connecting piece 1116; and preferably, both connecting pieces take an arc-shaped sectional shape. The second connecting piece 1115 is disposed on the driven member 1112, and therefore does not rotate and is only reciprocally displaced along with the driven member 1112, while the first connecting piece 1116 rotates along with the connecting member 112, the connecting pieces are in a cooperating state when the first connecting piece rotates to the position as shown in FIG. 3, and the displacement of the driven member 1112 can drive the connecting member 112 to be actuated accordingly so as to control the seat fixing member 122.

Preferably, the function selection member 1113 comprises a body selection member 11131, an elastic member 11132 and a selection connection member 11133, wherein the selection connection member 11133 is fixedly connected to the driving member 1111, and both ends of the elastic member 11132 respectively cooperate with the body selection member 11131 and the selection connection member 11133; therefore, the body selection member 11131 only cooperates with the driving member 1111 in an initial situation, and then is pressed to be displaced downward to cooperate with the driven member 1112, so that the driving member 1111 and the driven member 1112 are actuated together. Of course, the above description is a preferred embodiment of the function selection member 1113. In fact, only the body selection member 11131 of the three members is essential, and the others are optional or replaceable.

In this case, the rotation function is relatively independent, but rotation is also unlocked upon disengagement, which may still cause some troubles. Therefore, the above structures can be configured first, so that the first limiting member 124 is disposed on the driving member 1111 and the connecting member 112 is connected to the driven member 1112, then the driven member 1112 and the pedestal 121 are respectively provided with a third limiting member 126 and a fourth limiting member 127, and the collaborative working state of the first limiting member 124 and the second limiting member 125 is opposite to that of the third limiting member 126 and the fourth limiting member (i.e. the fourth limiting member 127 and the second limiting member 125 are oppositely disposed on the pedestal 121, and the third limiting member 126 is correspondingly disposed on the driven member 1112; therefore, when the driven member 1112 is displaced relative to the pedestal 121, the first limiting member 124 is disengaged from the second limiting member 125 and the third limiting member 126 is fitted into the fourth limiting member 127, or the first limiting member 124 is fitted into the second limiting member 125 and the third limiting member 126 is disengaged from the fourth limiting member 127); and when the driving member 1111 and the driven member 1112 are actuated together, if the first limiting member 124 is unlocked from the second limiting member 125 (i.e. the first limiting member 124 is disengaged from the second limiting member 125), the third limiting member 126 and the fourth limiting member 127 are locked (i.e. the third limiting member 126 is fitted into the fourth limiting member 127), or only one of the two sets of the limiting members cooperates at the same time. For example, the fourth limiting member 127 is disposed on the other side of the pedestal 121 (relative to the other side of the limiting hole as the first limiting member 124) and the third limiting member 126 is disposed on the driven member 1112, so that the limiting post 125 is disengaged from the limiting hole 124 and the second limiting post 126 is fitted into the second limiting hole 127 when the driven member 1112 and the driving member 1111 are actuated together; i.e. when the function selection member 1113 is not pressed, the operation of the driving member 1111 can only drive the limiting post 125 to be disengaged from the limiting hole 124 to enable rotation unlocking, but after the function selection member 1113 is pressed, the operation of the driving member 1111 can drive the driven member 1112 to be actuated therewith, and then the limiting post 125 is disengaged from the limiting hole 124 and the second limiting post 126 is fitted into the second limiting hole 127, so the rotation function is still locked when the function selection member 1113 is pressed, and the displacement of the driven member 1112 can only drive the seat fixing member 122 to be unlocked, allowing the seat assembly to be fitted therein or disengaged therefrom. Or alternatively, in this case, the two unlocking modes are independent of each other. When the function selection member 1113 is not operated, the actuating member 111 can be driven to operate the rotation unlocking of the seat assembly. When the function selection member 1113 is pressed, the actuating member 111 can be driven to operate the fixing unlocking of the seat assembly. Most preferably, only one third limiting member 126 and only one fourth limiting member 127 are provided, and the fourth limiting member 127 is disposed on the other side of a certain second limiting member 125 on the pedestal 121, e.g. on the other side of the limiting hole 125 in an initial state of the pedestal 121 as shown in FIGS. 1 to 8, so that the disengagement function can be unlocked only when the seat assembly is mounted in a forward direction, thus enhancing safety. Preferably, the first limiting member 124 and the third limiting member 126 are limiting posts; and the second limiting member 125 and the fourth limiting member 127 are limiting holes.

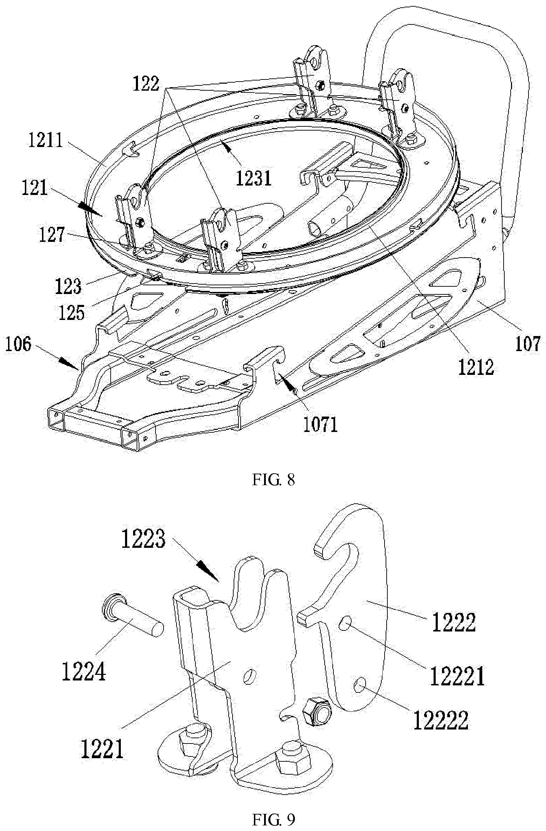

In some particular embodiments, the seat fixing member 122 comprises a first seat fixing member 1221 and a second seat fixing member 1222, wherein a middle part of the second seat fixing member 1222 is hinged on the first seat fixing member 1221, one end thereof is formed as a seat fixing mechanism 1223 in cooperation with the first seat fixing member 1221 or separately, and the other end thereof is formed as a connecting end for connecting the manipulation mechanism (specifically, for connecting the connecting member 112), thereby controlling the opening or closing of the seat fixing mechanism 1223 by driving the movement of the connecting end. The first seat fixing member 1221 is fixedly connected to the pedestal 121 to enable integral fixing of the seat fixing device; i.e. in the seat fixing device, the second seat fixing member 1222 is fitted on the first seat fixing member 1221. For example, as shown in FIG. 8, the second seat fixing member 1222 is provided with a hinge hole 12221 at a middle part thereof and a connecting hole 12222 for connecting the connecting member 112 at a lower part thereof, and a hinge shaft 1224 cooperates with the hinge hole 12221 so that the middle part of the second seat fixing member 1222 is hingedly disposed on the first seat fixing member 1221. Of course, this is just a specific structural form of the seat fixing member 122, and other existing seat fixing members that can be driven by the actuating member 111 and the connecting member 112 can also be used in the invention. The seat fixing member is not limited thereto.

In the above structure of the seat fixing member 122, the actuating member 111 drives the connecting end of the second seat fixing member 1222 to be displaced accordingly via the connecting member 112, so that the other end of the second seat fixing member 1222 is reversely displaced; and the seat fixing mechanism 1223 formed by the second seat fixing member 1222 in cooperation with the first seat fixing member 1221 or separately formed by the second seat fixing member 1222 is switched between the opened and closed states. For example, the actuating member 111 is reciprocally displaced in a certain direction, and thus drives the connecting end of the second seat fixing member 1222 to be displaced accordingly via the connecting member 112, so that the other end of the second seat fixing member 1222 is reversely displaced; and the seat fixing mechanism 1223 formed by the second seat fixing member 1222 in cooperation with the first seat fixing member 1221 or separately formed by the second seat fixing member 1222 is switched between the opened and closed states. Of course, the actuating member 111 is not necessarily disposed in the above straight-line displacement manner, and all moving modes capable of controlling the opening and closing of the seat fixing mechanism 1223 are feasible. For example, a middle part of the actuating member 111 is hingedly fixed, one end thereof is formed as an operating end and the other end thereof is formed as a connecting end, thereby driving the seat fixing mechanism 1223 to be opened and closed by leverage; or the actuating member 111 is rotatably disposed, thus driving the seat fixing mechanism 1223 to be opened and closed by rotating the actuating member 111.

In some other embodiments, the pedestal 121 is rotatably disposed on the body frame assembly 106 in one of the following two ways.

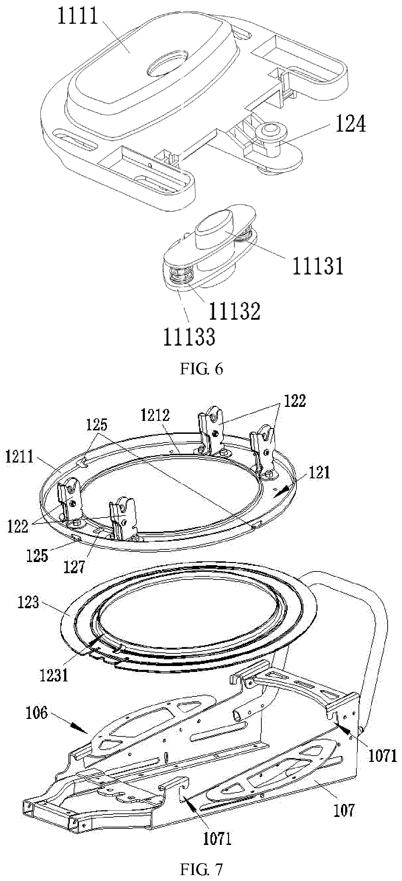

As shown in FIG. 7, the seat fixing device further comprises a fixing seat 123 that is fixedly arranged on the body frame assembly 106, wherein the fixing seat 123 is provided with a rotation guide member 1231, and the pedestal 121 is rotatably fitted on the fixing seat 123 to be rotatably disposed. Preferably, the rotation guide member 1231 is a generally annular guide member disposed on the fixing seat 123, which can be disposed continuously or spacedly (the portions are annular as a whole if disposed spacedly), and can be additionally disposed, or provided by the fixing seat 123 that is integrally formed. For matching and fitting, the pedestal 121 is also provided with a second rotation guide member 1212 matching the rotation guide member 1231 to provide a smooth rotation cooperation therebetween. More preferably, the body frame assembly 106 further comprises a pedestal fixing block 107 that is fixedly connected to the body frame assembly 106 and provided with a bayonet 1071; moreover, the pedestal 121 is correspondingly provided with an edge 1211, wherein the edge 1211 of the pedestal 121 is fitted into the bayonet 1071 upon cooperation to further restrict the rotation of the pedestal 121; i.e. the pedestal 121 is disposed on the fixing seat 123, so that the pedestal 121 is rotatably disposed through the cooperation between the rotation guide member 1231 and the second rotation guide member 1212; the edge 1211 is preferably an upper edge and the bayonet 1071 is disposed downward to cooperate with the upper edge, so that the pedestal 121 is vertically restricted thereby; and since the pedestal 121 is generally round, the bayonet 1071 can also act to prevent the pedestal 121 from falling off from the fixing seat 123. The above description is the first rotation arrangement, and the second alternative will be described below.

As shown in FIG. 8, the seat fixing device further comprises a fixing seat 123 that is fixedly connected to the pedestal 121, and the body frame assembly 106 further comprises a pedestal fixing block 107 that is fixedly connected to the body frame assembly 106 and provided with a bayonet 1071; moreover, the pedestal 121 is correspondingly provided with an edge 1211; and the fixing seat 123 and the pedestal 121 that are fixedly connected as a whole are rotatably disposed in the bayonet 1071 of the pedestal fixing block 107. Upon cooperation, the edge 1211 of the pedestal 121 is fitted into the bayonet 1071 to further restrict the rotation of the pedestal 121; i.e. the pedestal 121 and the fixing seat 123 as a whole are rotatably disposed in the pedestal fixing block 107 and the bayonet 1071 disposed thereon, and their rotation is allowed due to the absence of rigid connection; the edge 1211 is preferably an upper edge and the bayonet 1071 is disposed downward to cooperate with the upper edge, so that the pedestal 121 is vertically restricted thereby; and since the pedestal 121 is generally round, the bayonet 1071 can also act to prevent the pedestal 121 from falling off from the fixing seat 123. Such structural arrangement is mainly applicable to the following case, when the pedestal 121 and the pedestal fixing block 107 are made of a metallic material, the fixing seat 123 made of a soft material such as plastic is arranged therebetween so that the pedestal 121 is less likely to generate noise upon rotation. Of course, the rotation guide member 1231 and the second rotation guide member 1212 in the previous embodiment can also be disposed, but in the present embodiment, the guide members are not related to rotation and are just used for auxiliary positioning.

In some other embodiments, in order to achieve the above control function, the actuating member 111 can be either disposed in a reciprocally displaceable manner to drive the opening or closing of the seat fixing member 122 via the connecting member 112, or rotatably disposed or centrally hinged to drive the opening or closing of the seat fixing member 122 via the connecting member 112. In principle, the three modes are feasible, and can produce reciprocating displacement in a certain direction, so that the seat fixing member 122 can be driven to work accordingly.

A safety seat base comprises a body for overall bearing, and several corresponding functional components disposed on the body, wherein the functional components include an interface connection assembly 101, a support assembly 102, a seat manipulation assembly 100 and the like. The interface connection assembly 101 is used for connecting an in-vehicle safety seat interface (e.g. an isofix interface) to fix the base and various types of safety seats fitted on the base; and the support assembly 102 is used for contacting the vehicle floor to provide a supporting force.

The body comprises an upper housing 103 and a lower housing 104 for integral formation, a seat connection member 105 for a seat assembly to be disposed, and a body frame assembly 106 for overall load bearing. The interface connection assembly 101 and the support assembly 102 are respectively fixedly connected to the body frame assembly 106 so as to ensure the requirements on the overall structural strength of the safety seat base; the seat connection member 105 is fixedly connected to the pedestal 121 so as to be rotatably disposed therewith and cover the pedestal 121; and the upper housing 103 and the lower housing 104 are fitted outside the body frame assembly 106, so that the base is integrally housed and enclosed thereby, i.e. the base is housed and enclosed by the upper and lower housings, except that necessary parts of the connection mechanism, the manipulation mechanism and the support assembly are exposed.

The seat manipulation assembly 100 is the manipulation assembly of any as described in the above embodiments, i.e. the above manipulation assembly is applied to the safety seat base; the seat manipulation assembly is fitted on the body frame assembly 106 so that the seat assembly is fixed to the base; moreover, the seat connection member 105 is disposed outside the entire base and matches the seat fixing device on the body frame assembly 106, so that its overall contour and functions meet the needs in use. Preferably, the actuating member 111 is disposed at a front end of the entire base to facilitate user operation.

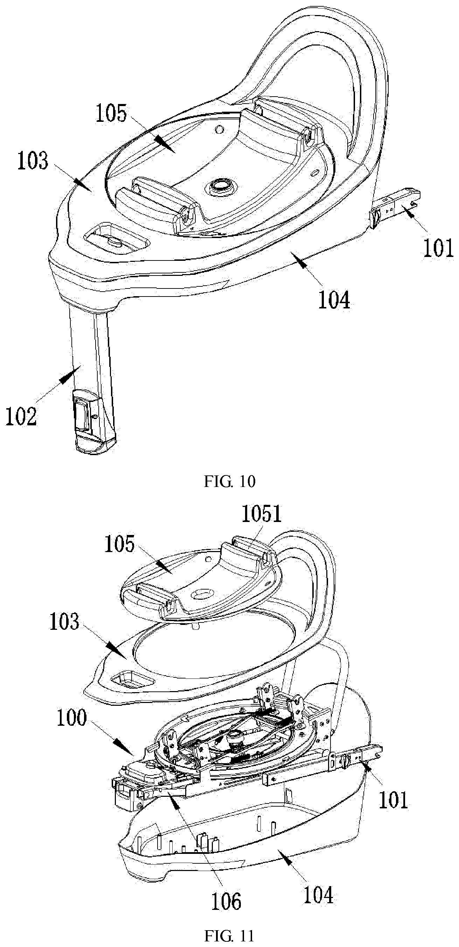

As shown in FIG. 11, in some embodiments, the seat connection member 105 is provided with a connecting port 1051, wherein the seat fixing member 122 is fitted into the connecting port 1051; and the connecting port 1051 can provide a guiding function when the seat assembly is connected to the seat fixing member 122, and can also optimize the appearance of the seat connection member 105 to prevent the seat fixing member 122 from being incompatibly disposed on the seat connection member 105.

A safety seat kit comprises a base and a seat assembly fitted thereon; wherein the base is the safety seat base as described in any of the above embodiments, or an additional base comprising the manipulation assembly of any of the above embodiments; and the seat assembly may be a safety seat or a carrier, which is provided at the bottom thereof with a connection mechanism for fixed connection to the base, for example, the connection mechanism comprises a connecting rod 301 that cooperates with the seat fixing member (122) of the above safety seat base; i.e. the connecting rod 301 can be fitted into the seat fixing mechanism 1223 to enable the fixed connection of the seat assembly.

**In** a most preferred embodiment, the safety seat kit comprises a base, a safety seat and a carrier, wherein the base is disposed in a car and connected to a safety seat interface (including but not limited to an existing standard interface such as an isofix interface) to provide a mounting base; the carrier is for younger infants, the safety seat is for older children, and in general, carriers are for infants aged 0-2 years while safety seats are for children aged 3-12 years; and the base is detachably connected to the carrier or the safety seat, so that replacement can be made according to actual needs, and the daily needs of the carrier can also be met. Moreover, the base is also rotatable so that the orientation of the carrier or the safety seat in use can be adjusted on the one hand, and on the other hand, the orientation of the carrier or the safety seat can also be adjusted when the carrier or the safety seat is removed, or a child gets on and off the seat, allowing that the carrier or the safety seat faces a car door to facilitate adult operation.

A manipulation method for a safety seat assembly comprises the following steps.

The safety seat assembly is configured to comprise a safety seat base and a seat assembly, wherein the seat assembly is preferably a carrier or a safety seat, and the safety seat base is disposed in a car and connected to a safety seat interface so that the seat assembly is fixed by cooperation therewith. The safety seat base is configured to comprise a seat fixing device and a manipulation mechanism, wherein the seat fixing device is used for fixed connection to a body frame assembly of the base to meet the requirements on the connection strength of the seat assembly and a base bearing frame so as to ensure safety; and the manipulation mechanism is used for controlling the working state of the seat fixing device, e.g. controlling its opened or closed state to control the engagement or disengagement of the seat assembly and the base. The seat fixing device is configured to further comprise a pedestal 121 directly or indirectly fitted on the body frame assembly borne by the base and a seat fixing member 122 disposed on the pedestal 121, and the manipulation mechanism is configured to further comprise an actuating member 111 and a connecting member 112.

The seat fixing member 122 is openable or closable to allow the seat assembly to be fitted therein or disengaged therefrom, so that the connecting member 112 directly or indirectly connects the actuating member 111 and the seat fixing member 122, and therefore the seat fixing member 122 is driven by the actuating member 111 to be opened or closed, thereby controlling the seat fixing device; i.e. the seat assembly is connected to the base bearing frame via the seat fixing member 122 and the pedestal 121, and the seat fixing member 122 has opened and closed states; in the opened state, the safety seat can be disengaged therefrom for its removal, replacement, etc.; and in the closed state, the seat assembly is firmly fixed to the base. The specific structure of the seat fixing member 122 can be configured as described in the above embodiments.

To achieve the above control, preferably, the actuating member 111 can be configured as either being disposed in a reciprocally displaceable manner to drive the opening or closing of the seat fixing member 122 via the connecting member 112, or being rotatably disposed or centrally hinged to drive the opening or closing of the seat fixing member 122 via the connecting member 112. In principle, the three modes are feasible, and can produce reciprocating displacement in a certain direction, so that the seat fixing member 122 can be driven to work accordingly.

In some embodiments, the safety seat base is further configured to provide a rotation control function, so that the pedestal 121 is rotatably disposed; and the seat manipulation assembly 100 further comprises a rotation control assembly capable of controlling the rotation of the pedestal 121. In order that the pedestal 121 is rotatably disposed, the seat fixing device further comprises a fixing seat 123, wherein the fixing seat 123 can be fixedly arranged on the body frame assembly 106 so that the pedestal 121 is rotatably disposed relative to the fixing seat, or the fixing seat 123 is fixedly connected to the pedestal 121 so that both components can be integrally disposed on the body frame assembly 106.

The rotation control assembly is configured to provide a locked state and an unlocked state, the pedestal 121 is rotatable relative to the fixing seat 123 in the unlocked state, and the rotation of both components is locked in the locked state. Preferably, the rotation control assembly may comprise a first limiting member 124 and a second limiting member 125 that cooperate witch each other, and are respectively arranged on the pedestal 121 and the body frame assembly; and the rotation of the pedestal 121 is locked when both members cooperate, while the pedestal 121 is rotatable on the body frame assembly when both members are disengaged.

Preferably, the actuating member 111 is configured to comprise a driving member 1111, a driven member 1112 and a function selection member 1113, wherein the driving member 1111 and the driven member 1112 are displaced in the same direction, but are not directly connected, so that the driven member 1112 and the driving member 1111 can be actuated together when necessary, and the function selection member 1113 is disposed on the driving member 1111 and has two adjustable states, i.e. a first state and a second state; and the driving member is disengaged from the driven member 1112 in the first state and connected to the driven member 1112 in the second state.. Accordingly, the driven member 1112 is disengaged from the driving member 1111 in the first state, and actions such as displacement of the driving member 1111 cannot drive the connecting member 112 to move accordingly; and the driven member 1112 is engaged with the driving member 1111 in the second state, and actions such as displacement of the driving member 1111 can allow the connecting member 112 to move together. Relevant implementation structures can be as described above.

Preferably, the function selection member 1113 is configured to comprise a body selection member 11131, an elastic member 11132 and a selection connection member 11133, wherein the selection connection member 11133 is fixedly connected to the driving member 1111, and both ends of the elastic member 11132 respectively cooperate with the body selection member 11131 and the selection connection member 11133; therefore, the body selection member 11131 only cooperates with the driving member 1111 in an initial situation, and then is pressed to be displaced downward to cooperate with the driven member 1112, so that the driving member 1111 and the driven member 1112 are actuated together.

Preferably, the above structures can be configured first, so that the first limiting member 124 is disposed on the driving member 1111 and the connecting member 112 is connected to the driven member 1112, then the driven member 1112 and the pedestal 121 are respectively provided with a third limiting member 126 and a fourth limiting member 127, and the collaborative working state of the first limiting member 124 and the second limiting member 125 is opposite to that of the third limiting member 126 and the fourth limiting member. In this case, the two unlocking modes are independent of each other. When the function selection member 1113 is not operated, the actuating member 111 can be driven to operate the rotation unlocking of the seat assembly. When the function selection member 1113 is pressed, the actuating member 111 can be driven to operate the fixing unlocking of the seat assembly.

## Claims

1. A manipulation assembly for a safety seat base, comprising a seat fixing device and a manipulation mechanism, the seat fixing device comprising a pedestal (121) and a seat fixing member (122) disposed thereon, and the pedestal (121) being fitted on a body frame assembly (106);
the manipulation mechanism comprises an actuating member (111) and a connecting member (112), and the connecting member (112) is used to connect the actuating member (111) and the seat fixing member (122), so that the seat fixing member (122) is driven by the actuating member (111) to be opened or closed to allow a seat assembly to be fitted therein or disengaged therefrom; and
the pedestal (121) is rotatably fitted on the body frame assembly (106), the seat manipulation assembly further comprises a rotation control assembly capable of controlling the rotation of the pedestal, the rotation control assembly has a locked state and an unlocked state, the pedestal (121) is rotatable relative to a fixing seat (123) in the unlocked state, and the rotation of both components is inhibited in the locked state,
**characterized in that**
the actuating member (111) comprises a driving member (1111), a driven member (1112) and a function selection member (1113), the function selection member (1113) is disposed on the driving member (1111) and has a first state and a second state, in the first state, the function selection member (1113) is disengaged from the driven member (1112) so that the driving member (1111) and the connecting member (112) are not engaged, then the driving member (1111) cannot drive the connecting member (112) to move, and in the second state, the function selection member (1113) is connected to the driven member (1112) so that the driving member (1111) and the connecting member (112) are engaged, then the driving member (1111) can drive the connecting member (112) to move.

2. The manipulation assembly for a safety seat base according to claim 1, wherein the rotation control assembly comprises a first limiting member (124) and a second limiting member (125) that cooperate with each other, and are respectively arranged on the body frame assembly and the pedestal (121); and the rotation of the pedestal (121) is locked when both members cooperate, while the pedestal (121) is rotatable on the body frame assembly when both members are disengaged; and several said second limiting members (125) are provided, and spacedly disposed on the pedestal (121) at a set angle; and only one first limiting member (124) is provided, and disposed on the actuating member (111) and actuated therewith.

3. The manipulation assembly for a safety seat base according to claim 1, wherein the function selection member (1113) comprises a body selection member (11131), an elastic member (11132) and a selection connection member (11133), the selection connection member (11133) is fixedly connected to the driving member (1111), and both ends of the elastic member (11132) respectively cooperate with the body selection member (11131) and the selection connection member (11133); therefore, the body selection member (11131) only cooperates with the driving member (1111) in an initial situation, and then is pressed to be displaced downward to cooperate with the driven member (1112), so that the driving member (1111) and the driven member (1112) are actuated together.

4. The manipulation assembly for a safety seat base according to claim 1, wherein the first limiting member (124) is disposed on the driving member (1111) and actuated therewith, and the connecting member (112) is connected to the driven member (1112);
the driven member (1112) and the pedestal (121) are respectively provided with a third limiting member (126) and a fourth limiting member (127), so that the cooperating state of the first limiting member (124) and the second limiting member (125) is opposite to that of the third limiting member (126) and the fourth limiting member (127);
the fourth limiting member (127) and the second limiting member (125) are oppositely disposed on the pedestal (121), and the third limiting member (126) is correspondingly disposed on the driven member (1112); therefore, when the driven member (1112) is displaced relative to the pedestal (121), the first limiting member (124) is disengaged from the second limiting member (125) and the third limiting member (126) is fitted into the fourth limiting member (127), or the first limiting member (124) is fitted into the second limiting member (125) and the third limiting member (126) is disengaged from the fourth limiting member (127); and
the first limiting member and/or the third limiting member are limiting posts; and the second limiting member and/or the fourth limiting member are limiting holes.

5. The manipulation assembly for a safety seat base according to claim 1, wherein the seat fixing device further comprises a fixing seat (123) that is fixedly arranged on the body frame assembly; the fixing seat (123) is provided with a rotation guide member (1231) and the pedestal (121) is rotatably fitted on the fixing seat (123); and the body frame assembly comprises a pedestal fixing block (107) that is provided with a bayonet (1071); or
the seat fixing device further comprises a fixing seat (123) that is fixedly connected to the pedestal (121), and the body frame assembly comprises a pedestal fixing block (107) that is provided with several bayonets (1071); and the fixing seat (123) and the pedestal (121) are rotatably disposed in the respective bayonets (1071) relative to the body frame assembly.

6. The manipulation assembly for a safety seat base according to claim 1, wherein the actuating member (111) is disposed in a reciprocally displaceable manner to drive the opening or closing of the seat fixing member (122) via the connecting member (112); or
the actuating member (111) is rotatably disposed or centrally hinged to drive the opening or closing of the seat fixing member (122) via the connecting member (112).

7. A safety seat base, comprising a body, and a seat manipulation assembly (100) and an interface connection assembly (101) fitted on the body, the interface connection assembly (101) being used for connecting an in-vehicle safety seat interface; wherein the seat manipulation assembly (100) is the manipulation assembly for a safety seat base according to any one of claims 1 to 6; and
the body comprises a seat connection member (105) for a seat assembly to be disposed, and a body frame assembly (106) for overall load bearing; the interface connection assembly (101) is fixedly connected to the body frame assembly (106) and the seat connection member (105) is fixedly connected to the pedestal (121); and the seat connection member (105) is provided with a connecting port (1051), and the seat fixing member (122) is fitted into the connecting port (1051).

8. A safety seat kit, comprising a base and a seat assembly fitted thereon; wherein
the base is the safety seat base of claim 7; a connection mechanism is arranged at the bottom of the seat assembly, and the connection mechanism comprises a connecting rod that cooperates with the seat fixing member (122) of the safety seat base; and the seat assembly includes a safety seat and a carrier.

9. A safety seat manipulation method, comprising:
configuring a safety seat assembly to comprise a safety seat base and a seat assembly, the seat assembly being a carrier and/or a safety seat; and configuring the safety seat base to comprise a seat fixing device and a manipulation mechanism; and
configuring the seat fixing device to further comprise a pedestal (121) fitted on a body frame assembly of the base and a seat fixing member (122) disposed on the pedestal (121), and configuring the manipulation mechanism to further comprise an actuating member (111) and a connecting member (112), the seat fixing member (122) being openable or closable to allow the seat assembly to be fitted therein or disengaged therefrom; and the actuating member (111) being disposed in a reciprocally displaceable manner to drive the opening or closing of the seat fixing member (122) via the connecting member (112); and
the pedestal (121) being rotatably disposed, and the seat manipulation assembly (100) further comprising a rotation control assembly capable of controlling the rotation of the pedestal (121); and the rotation control assembly having a locked state and an unlocked state, the pedestal (121) being rotatable relative to a fixing seat (123) in the unlocked state, and the rotation of both components being locked in the locked state,
**characterized in that** the actuating member (111) is configured to comprise a driving member (1111), a driven member (1112) and a function selection member (1113), so that the driven member (1112) and the driving member (1111) are actuated together when connected, and the function selection member (1113) is disposed on the driving member (1111) and has two adjustable states; and the driving member is disengaged from the driven member (1112) in a first state and connected to the driven member (1112) in a second state; and
the driven member (1112) is disengaged from the driving member (1111) in the first state, and the actuation of the driving member (1111) only drives the first limiting member (124) to be actuated and cannot drive the connecting member (112) to move accordingly; and the driven member (1112) is engaged with the driving member (1111) in the second state, and the actuation of the driving member (1111) can allow the connecting member (112) to be actuated together.

10. The method according to claim 9, wherein the rotation control assembly is configured to comprise a first limiting member (124) and a second limiting member (125) that cooperate with each other, and are respectively arranged on the body frame assembly and the pedestal (121); and the rotation of the pedestal (121) is locked when both members cooperate, while the pedestal (121) is rotatable on the body frame assembly when both members are disengaged; and
several said second limiting members (125) are provided, and spacedly disposed on the pedestal (121) at a set angle; and only one first limiting member (124) is provided, and disposed on the actuating member (111) and actuated therewith.

11. The method according to claim 10, wherein the first limiting member (124) is configured to be disposed on the driving member (1111) and actuated therewith, the connecting member (112) is connected to the driven member (1112), then the driven member (1112) and the pedestal (121) are respectively provided with a third limiting member (126) and a fourth limiting member (127), and the collaborative working state of the first limiting member (124) and the second limiting member (125) is opposite to that of the third limiting member (126) and the fourth limiting member (127); and
the driven member (1112) is disengaged from the driving member (1111) in the first state, and the actuation of the driving member (1111) only drives the first limiting member (124) to be actuated and cannot drive the connecting member (112) to be actuated, thereby controlling the engagement or disengagement of the first limiting member (124) and the second limiting member (125); and the driven member (1112) is engaged with the driving member (1111) in the second state, the actuation of the driving member (1111) can allow the connecting member (112) to be actuated together, the cooperating state of the third limiting member (126) and the fourth limiting member (127) is opposite to that of the first limiting member (124) and the second limiting member (125), the rotation of the pedestal (121) is always locked, and the displacement of the driven member (1112) can only drive the seat fixing member (122) to be unlocked.

12. The method according to claim 11, wherein the fourth limiting member (127) and the second limiting member (125) are oppositely disposed on the pedestal (121), and the third limiting member (126) is correspondingly disposed on the driven member (1112); therefore, when the driven member (1112) is displaced relative to the pedestal (121), the first limiting member (124) is disengaged from the second limiting member (125) and the third limiting member (126) is fitted into the fourth limiting member (127), or the first limiting member (124) is fitted into the second limiting member (125) and the third limiting member (126) is disengaged from the fourth limiting member (127).

13. The method according to claim 9, wherein the actuating member (111) is rotatably disposed or centrally hinged instead to drive the opening or closing of the seat fixing member (122) via the connecting member (112).

## Patentansprüche

1. - Manipulationsanordnung für eine Sicherheitssitzbasis, umfassend eine Sitzbefestigungsvorrichtung sowie einen Manipulationsmechanismus, wobei die Sitzbefestigungsvorrichtung einen Sockel (121) und ein Sitzbefestigungselement (122) umfasst, das darauf angeordnet ist, und der Sockel (121) auf eine Karosserierahmenanordnung (106) gepasst ist;
der Manipulationsmechanismus umfasst ein Betätigungselement (111) und ein Verbindungselement (112), und das Verbindungselement (112) wird verwendet, um das Betätigungselement (111) und das Sitzbefestigungselement (122) zu verbinden, so dass das Sitzbefestigungselement (122) durch das Betätigungselement (111) angetrieben wird, um geöffnet oder geschlossen zu werden, um zu ermöglichen, dass eine Sitzanordnung darin eingepasst oder davon gelöst wird; und
der Sockel (121) ist drehbar auf die Karosserierahmenanordnung (106) gepasst, die Sitzmanipulationsanordnung umfasst weiter eine Drehsteuerungsanordnung, die dazu in der Lage ist, die Drehung des Sockels zu steuern, die Drehsteuerungsanordnung weist einen verriegelten und einen entriegelten Zustand auf, der Sockel (121) ist mit Bezug auf einen Befestigungssitz (123) im entriegelten Zustand drehbar und die Drehung beider Komponenten wird im verriegelten Zustand verhindert,
**dadurch gekennzeichnet, dass**
das Betätigungselement (111) ein Antriebselement (1111), ein angetriebenes Element (1112) und ein Funktionsauswahlelement (1113) umfasst, das Funktionsauswahlelement (1113) auf dem Antriebselement (1111) angeordnet ist und einen ersten Zustand und einen zweiten Zustand aufweist, im ersten Zustand das Funktionsauswahlelement (1113) vom angetriebenen Element (1112) gelöst ist, so dass das Antriebselement (1111) und das Verbindungselement (112) nicht eingegriffen sind, wodurch das Antriebselement (1111) das Verbindungselement (112) nicht in Bewegung versetzen kann, und im zweiten Zustand das Funktionsauswahlelement (1113) mit dem angetriebenen Element (1112) verbunden ist, so dass das Antriebselement (1111) und das Verbindungselement (112) eingegriffen sind, wodurch das Antriebselement (1111) das Verbindungselement (112) in Bewegung versetzen kann.

2. - Manipulationsanordnung für eine Sicherheitssitzbasis nach Anspruch 1, wobei die Drehsteuerungsanordnung ein erstes Begrenzungselement (124) und ein zweites Begrenzungselement (125) umfasst, die miteinander zusammenarbeiten und jeweils auf der Karosserierahmenanordnung und dem Sockel (121) angeordnet sind; und die Drehung des Sockels (121) verriegelt ist, wenn beide Elemente zusammenarbeiten, während der Sockel (121) auf der Karosserierahmenanordnung drehbar ist, wenn beide Elemente gelöst sind, und mehrere der zweiten Begrenzungselemente (125) bereitgestellt sind, und voneinander beabstandet auf dem Sockel (121) in einem festen Winkel angeordnet sind; und nur ein erstes Begrenzungselement (124) bereitgestellt und auf dem Betätigungselement (111) angeordnet ist und dadurch betätigt wird.

3. - Manipulationsanordnung für eine Sicherheitssitzbasis nach Anspruch 1, wobei das Funktionsauswahlelement (1113) ein Karosserieauswahlelement (11131), ein elastisches Element (11132) und ein Auswahlverbindungselement (11133) umfasst, das Auswahlverbindungselement (11133) fest mit dem Antriebselement (1111) verbunden ist und beide Enden des elastischen Elements (11132) jeweils mit dem Karosserieauswahlelement (11131) und dem Auswahlverbindungselement (11133) zusammenarbeiten; wodurch das Karosserieauswahlelement (11131) nur mit dem Antriebselement (1111) in einer anfänglichen Situation zusammenarbeitet und dann gedrückt wird, um nach unten verschoben zu werden, um mit dem angetriebenen Element (1112) zusammenzuarbeiten, so dass das Antriebselement (1111) und das angetriebene Element (1112) zusammen betätigt werden.

4. - Manipulationsanordnung für eine Sicherheitssitzbasis nach Anspruch 1, wobei das erste Begrenzungselement (124) auf dem Antriebselement (1111) angeordnet ist und damit betätigt wird und das Verbindungselement (112) mit dem angetriebenen Element (1112) verbunden ist;
das angetriebene Element (1112) und der Sockel (121) jeweils mit einem dritten Begrenzungselement (126) und einem vierten Begrenzungselement (127) ausgestattet sind, so dass der zusammenarbeitende Zustand des ersten Begrenzungselements (124) und des zweiten Begrenzungselements (125) gegenüber demjenigen des dritten Begrenzungselements (126) und des vierten Begrenzungselements (127) ist;
das vierte Begrenzungselement (127) und das zweite Begrenzungselement (125) einander gegenüberliegend auf dem Sockel (121) angeordnet sind und das dritte Begrenzungselement (126) entsprechend auf dem angetriebenen Element (1112) angeordnet ist; wodurch, wenn das angetriebene Element (1112) mit Bezug auf den Sockel (121) verschoben wird, das erste Begrenzungselement (124) vom zweiten Begrenzungselement (125) gelöst wird und das dritte Begrenzungselement (126) in das vierte Begrenzungselement (127) gepasst wird oder das erste Begrenzungselement (124) in das zweite Begrenzungselement (125) gepasst wird und das dritte Begrenzungselement (126) vom vierten Begrenzungselement (127) gelöst wird; und
das erste Begrenzungselement und/oder das dritte Begrenzungselement Begrenzungsstifte sind; und das zweite Begrenzungselement und/oder das vierte Begrenzungselement Begrenzungslöcher sind.

5. - Manipulationsanordnung für eine Sicherheitssitzbasis nach Anspruch 1, wobei die Sitzbefestigungsvorrichtung weiter einen Befestigungssitz (123) umfasst, der fest auf der Karosserierahmenanordnung angeordnet ist; der Befestigungssitz (123) mit einem Drehführungselement (1231) ausgestattet ist und der Sockel (121) drehbar auf den Befestigungssitz (123) gepasst ist; und die Karosserierahmenanordnung einen Sockelbefestigungsblock (107) umfasst, der mit einem Bajonett (1071) ausgestattet ist; oder
die Sitzbefestigungsvorrichtung weiter einen Befestigungssitz (123) umfasst, der fest mit dem Sockel (121) verbunden ist, und die Karosserierahmenanordnung einen Sockelbefestigungsblock (107) umfasst, der mit mehreren Bajonetten (1071) ausgestattet ist; und der Befestigungssitz (123) und der Sockel (121) drehbar in den entsprechenden Bajonetten (1071) mit Bezug auf die Karosserierahmenanordnung angeordnet sind.

6. - Manipulationsanordnung für eine Sicherheitssitzbasis nach Anspruch 1, wobei das Betätigungselement (111) auf eine reziprok verschiebbare Weise angeordnet ist, um das Öffnen oder Schließen des Sitzbefestigungselements (122) mit Hilfe des Verbindungselements (112) anzutreiben; oder
das Betätigungselement (111) drehbar angeordnet oder zentral mit einem Scharnier versehen ist, um das Öffnen oder Schließen des Sitzbefestigungselements (122) mit Hilfe des Verbindungselements (112) anzutreiben.

7. - Sicherheitssitzbasis, umfassend eine Karosserie, eine Sitzmanipulationsanordnung (100) und eine Schnittstellenverbindungsanordnung (101), die auf die Karosserie gepasst ist, wobei die Schnittstellenverbindungsanordnung (101) verwendet wird, um eine fahrzeuginterne Sicherheitssitzschnittstelle zu verbinden; wobei die Sitzmanipulationsanordnung (100) die Manipulationsanordnung für eine Sicherheitssitzbasis nach einem der Ansprüche 1 bis 6 ist; und
die Karosserie ein Sitzverbindungselement (105), damit eine Sitzanordnung angeordnet wird, und eine Karosserierahmenanordnung (106) für eine vollständige Tragfähigkeit umfasst; die Schnittstellenverbindungsanordnung (101) fest mit der Karosserierahmenanordnung (106) verbunden ist und das Sitzverbindungselement (105) fest mit dem Sockel (121) verbunden ist; und das Sitzverbindungselement (105) mit einem Verbindungsanschluss (1051) ausgestattet ist, und das Sitzbefestigungselement (122) in den Verbindungsanschluss (1051) gepasst ist.

8. - Sicherheitssitz-Kit, umfassend eine Basis und eine Sitzanordnung, die darauf gepasst ist; wobei die Basis die Sicherheitssitzbasis nach Anspruch 7 ist; ein Verbindungsmechanismus am Boden der Sitzanordnung angeordnet ist und der Verbindungsmechanismus eine Verbindungsstange umfasst, die mit dem Sitzbefestigungselement (122) der Sicherheitssitzbasis zusammenarbeitet; und die Sitzanordnung einen Sicherheitssitz und einen Träger beinhaltet.

9. - Sicherheitssitz-Manipulationsverfahren, umfassend:
Konfigurieren einer Sicherheitssitzanordnung, um eine Sicherheitssitzbasis und eine Sitzanordnung zu umfassen, wobei die Sitzanordnung ein Träger und/oder ein Sicherheitssitz ist; und Konfigurieren der Sicherheitssitzbasis, um eine Sitzbefestigungsvorrichtung und einen Manipulationsmechanismus zu umfassen; und
Konfigurieren der Sitzbefestigungsvorrichtung, um weiter einen Sockel (121), der auf eine Karosserierahmenanordnung der Basis gepasst ist, und ein Sitzbefestigungselement (122), das auf dem Sockel (121) angeordnet ist, zu umfassen, und Konfigurieren des Manipulationsmechanismus, um weiter ein Betätigungselement (111) und ein Verbindungselement (112) zu umfassen, wobei das Sitzbefestigungselement (122) geöffnet oder geschlossen werden kann, um zu ermöglichen, dass die Sitzanordnung darin eingepasst oder davon gelöst wird; und wobei das Betätigungselement (111) auf eine reziprok verschiebbare Weise angeordnet ist, um das Öffnen oder Schließen des Sitzbefestigungselements (122) mit Hilfe des Verbindungselements (112) anzutreiben; und
wobei der Sockel (121) drehbar angeordnet ist und die Sitzmanipulationsanordnung (100) weiter eine Drehsteuerungsanordnung umfasst, die dazu in der Lage ist, die Drehung des Sockels (121) zu steuern; und die Drehsteuerungsanordnung einen verriegelten Zustand und einen entriegelten Zustand aufweist, wobei der Sockel (121) mit Bezug auf einen Befestigungssitz (123) in den entriegelten Zustand drehbar ist und die Drehung beider Komponenten im verriegelten Zustand verriegelt ist,
**dadurch gekennzeichnet, dass** das Betätigungselement (111) konfiguriert ist, um ein Antriebselement (1111), ein angetriebenes Element (1112) und ein Funktionsauswahlelement (1113) zu umfassen, so dass das angetriebene Element (1112) und das Antriebselement (1111) zusammen betätigt werden, wenn sie verbunden sind, und das Funktionsauswahlelement (1113) auf dem Antriebselement (1111) angeordnet ist und zwei einstellbare Zustände aufweist; und das Antriebselement vom angetriebenen Element (1112) in einem ersten Zustand gelöst ist und in einem zweiten Zustand mit dem angetriebenen Element (1112) verbunden ist; und
das angetriebene Element (1112) vom Antriebselement (1111) im ersten Zustand gelöst ist und die Betätigung des Antriebselements (1111) nur das erste Begrenzungselement (124) antreibt, um betätigt zu werden, und nicht das Verbindungselement (112) antreiben kann, um dementsprechend zu bewegen; und das angetriebene Element (1112) mit dem Antriebselement (1111) im zweiten Zustand eingegriffen ist und die Betätigung des Antriebselements (1111) ermöglichen kann, dass das Verbindungselement (112) zusammen betätigt wird.

10. - Verfahren nach Anspruch 9, wobei die Drehsteuerungsanordnung konfiguriert ist, um ein erstes Begrenzungselement (124) und ein zweites Begrenzungselement (125) zu umfassen, die miteinander zusammenarbeiten und jeweils auf der Karosserierahmenanordnung und dem Sockel (121) angeordnet sind; und die Drehung des Sockels (121) verriegelt ist, wenn beide Elemente zusammenarbeiten, während der Sockel (121) auf der Karosserierahmenanordnung drehbar ist, wenn beide Elemente gelöst sind; und
mehrere der zweiten Begrenzungselemente (125) bereitgestellt sind und voneinander beabstandet auf dem Sockel (121) in einem festen Winkel angeordnet sind; und nur ein erstes Begrenzungselement (124) bereitgestellt und auf dem Betätigungselement (111) angeordnet ist und damit betätigt wird.

11. - Verfahren nach Anspruch 10, wobei das erste Begrenzungselement (124) konfiguriert ist, um auf dem Antriebselement (1111) angeordnet zu sein und damit betätigt zu werden, das Verbindungselement (112) mit dem angetriebenen Element (1112) verbunden ist, dann das angetriebene Element (1112) und der Sockel (121) jeweils mit einem dritten Begrenzungselement (126) und einem vierten Begrenzungselement (127) ausgestattet sind und der zusammenwirkende Arbeitszustand des ersten Begrenzungselements (124) und des zweiten Begrenzungselements (125) gegenüber demjenigen des dritten Begrenzungselements (126) und des vierten Begrenzungselements (127) ist; und
das angetriebene Element (1112) vom Antriebselement (1111) im ersten Zustand gelöst ist und die Betätigung des Antriebselements (1111) nur das erste Begrenzungselement (124), das betätigt werden soll, antreibt und nicht das Verbindungselement (112), das betätigt werden soll, antreiben kann, wodurch der Eingriff oder das Lösen des ersten Begrenzungselements (124) und des zweiten Begrenzungselements (125) gesteuert wird; und das angetriebene Element (1112) mit dem Antriebselement (1111) im zweiten Zustand eingegriffen ist, die Betätigung des Antriebselements (1111) ermöglichen kann, dass das Verbindungselement (112) zusammen betätigt wird, der zusammenarbeitende Zustand des dritten Begrenzungselements (126) und des vierten Begrenzungselements (127) gegenüber demjenigen des ersten Begrenzungselements (124) und des zweiten Begrenzungselements (125) ist, die Drehung des Sockels (121) immer verriegelt ist und die Verschiebung des angetriebenen Elements (1112) nur das Sitzbefestigungselement (122) antreiben kann, das entriegelt werden soll.

12. - Verfahren nach Anspruch 11, wobei das vierte Begrenzungselement (127) und das zweite Begrenzungselement (125) einander gegenüberliegend auf dem Sockel (121) angeordnet sind und das dritte Begrenzungselement (126) entsprechend auf dem angetriebenen Element (1112) angeordnet ist; daher, wenn das angetriebene Element (1112) mit Bezug auf den Sockel (121) verschoben wird, das erste Begrenzungselement (124) vom zweiten Begrenzungselement (125) gelöst ist und das dritte Begrenzungselement (126) in das vierte Begrenzungselement (127) gepasst wird, oder das erste Begrenzungselement (124) in das zweite Begrenzungselement (125) gepasst wird und das dritte Begrenzungselement (126) vom vierten Begrenzungselement (127) gelöst wird.

13. - Verfahren nach Anspruch 9, wobei das Betätigungselement (111) drehbar angeordnet oder stattdessen zentral mit einem Scharnier versehen ist, um das Öffnen oder Schließen des Sitzbefestigungselements (122) mit Hilfe des Verbindungselements (112) anzutreiben.

## Revendications

1. - Ensemble de manipulation pour une base de siège de sécurité, comprenant un dispositif de fixation de siège et un mécanisme de manipulation, le dispositif de fixation de siège comprenant un socle (121) et un élément de fixation de siège (122) disposé sur celui-ci, et le socle (121) étant monté sur un ensemble châssis de corps (106) ;
le mécanisme de manipulation comprend un élément d'actionnement (111) et un élément de liaison (112), et l'élément de liaison (112) est utilisé pour relier l'élément d'actionnement (111) et l'élément de fixation de siège (122), de telle sorte que l'élément de fixation de siège (122) est entraîné par l'élément d'actionnement (111) pour être ouvert ou fermé afin de permettre à un ensemble siège d'y être monté ou d'en être désengagé ; et
le socle (121) est monté rotatif sur l'ensemble châssis de corps (106), l'ensemble de manipulation de siège comprend en outre un ensemble de commande de rotation capable de commander la rotation du socle, l'ensemble de commande de rotation a un état verrouillé et un état déverrouillé, le socle (121) est apte à tourner par rapport à un siège de fixation (123) à l'état déverrouillé, et la rotation des deux composants est empêchée à l'état verrouillé,
**caractérisé par le fait que**
l'élément d'actionnement (111) comprend un élément d'entraînement (1111), un élément entraîné (1112) et un élément de sélection de fonction (1113), l'élément de sélection de fonction (1113) est disposé sur l'élément d'entraînement (1111) et a un premier état et un second état, dans le premier état, l'élément de sélection de fonction (1113) est désengagé de l'élément entraîné (1112) de telle sorte que l'élément d'entraînement (1111) et l'élément de liaison (112) ne sont pas engagés, l'élément d'entraînement (1111) ne peut alors pas amener l'élément de liaison (112) à se déplacer, et, dans le second état, l'élément de sélection de fonction (1113) est relié à l'élément entraîné (1112) de telle sorte que l'élément d'entraînement (1111) et l'élément de liaison (112) sont engagés, l'élément d'entraînement (1111) peut alors amener l'élément de liaison (112) à se déplacer.

2. - Ensemble de manipulation pour une base de siège de sécurité selon la revendication 1, dans lequel l'ensemble de commande de rotation comprend un premier élément de limitation (124) et un deuxième élément de limitation (125) qui coopèrent l'un avec l'autre, et sont respectivement disposés sur l'ensemble châssis de corps et le socle (121) ; et la rotation du socle (121) est verrouillée lorsque les deux éléments coopèrent, tandis que le socle (121) est apte à tourner sur l'ensemble châssis de corps lorsque les deux éléments sont désengagés ; et plusieurs desdits seconds éléments de limitation (125) sont prévus et disposés de façon espacée sur le socle (121) à un angle déterminé ; et seul un premier élément de limitation (124) est prévu et disposé sur l'élément d'actionnement (111) et actionné par celui-ci.

3. - Ensemble de manipulation pour une base de siège de sécurité selon la revendication 1, dans lequel l'élément de sélection de fonction (1113) comprend un élément de sélection de corps (11131), un élément élastique (11132) et un élément de liaison de sélection (11133), l'élément de liaison de sélection (11133) est relié de manière fixe à l'élément d'entraînement (1111), et les deux extrémités de l'élément élastique (11132) coopèrent respectivement avec l'élément de sélection de corps (11131) et l'élément de liaison de sélection (11133) ; par conséquent, l'élément de sélection du corps (11131) coopère seulement avec l'élément d'entraînement (1111) dans une situation initiale, puis est pressé pour être déplacé vers le bas afin de coopérer avec l'élément entraîné (1112), de telle sorte que l'élément d'entraînement (1111) et l'élément entraîné (1112) sont actionnés ensemble.

4. - Ensemble de manipulation pour une base de siège de sécurité selon la revendication 1, dans lequel le premier élément de limitation (124) est disposé sur l'élément d'entraînement (1111) et actionné par celui-ci, et l'élément de liaison (112) est relié à l'élément entraîné (1112) ;
l'élément entraîné (1112) et le socle (121) comportent respectivement un troisième élément de limitation (126) et un quatrième élément de limitation (127), de telle sorte que l'état de coopération du premier élément de limitation (124) et du deuxième élément de limitation (125) est opposé à celui du troisième élément de limitation (126) et du quatrième élément de limitation (127) ;
le quatrième élément de limitation (127) et le deuxième élément de limitation (125) sont disposés de manière opposée sur le socle (121), et le troisième élément de limitation (126) est disposé de manière correspondante sur l'élément entraîné (1112) ; par conséquent, lorsque l'élément entraîné (1112) est déplacé par rapport au socle (121), le premier élément de limitation (124) est désengagé du deuxième élément de limitation (125) et le troisième élément de limitation (126) est monté dans le quatrième élément de limitation (127), ou le premier élément de limitation (124) est monté dans le deuxième élément de limitation (125) et le troisième élément de limitation (126) est désengagé du quatrième élément de limitation (127) ; et
le premier élément de limitation et/ou le troisième élément de limitation sont des plots de limitation ; et le deuxième élément de limitation et/ou le quatrième élément de limitation sont des trous de limitation.

5. - Ensemble de manipulation pour une base de siège de sécurité selon la revendication 1, dans lequel le dispositif de fixation de siège comprend en outre un siège de fixation (123) qui est disposé de manière fixe sur l'ensemble châssis de corps ; le siège de fixation (123) comporte un élément de guidage de rotation (1231) et le socle (121) est monté de manière rotative sur le siège de fixation (123) ; et l'ensemble châssis de corps comprend un bloc de fixation de socle (107) qui comporte une baïonnette (1071) ; ou
le dispositif de fixation de siège comprend en outre un siège de fixation (123) qui est relié de manière fixe au socle (121), et l'ensemble châssis de corps comprend un bloc de fixation de socle (107) qui comporte plusieurs baïonnettes (1071) ; et le siège de fixation (123) et le socle (121) sont disposés de manière rotative dans les baïonnettes respectives (1071) par rapport à l'ensemble châssis de corps.

6. - Ensemble de manipulation pour une base de siège de sécurité selon la revendication 1, dans lequel l'élément d'actionnement (111) est disposé de manière à être déplaçable en va-et-vient pour entraîner l'ouverture ou la fermeture de l'élément de fixation de siège (122) par l'intermédiaire de l'élément de liaison (112) ; ou
l'élément d'actionnement (111) est disposé de manière rotative ou articulé de manière centrale pour entraîner l'ouverture ou la fermeture de l'élément de fixation de siège (122) par l'intermédiaire de l'élément de liaison (112).

7. - Base de siège de sécurité, comprenant une corps, un ensemble de manipulation de siège (100) et un ensemble de liaison d'interface (101) monté sur la corps, l'ensemble de liaison d'interface (101) étant utilisé pour relier une interface de siège de sécurité embarquée ; dans laquelle l'ensemble de manipulation de siège (100) est l'ensemble de manipulation pour une base de siège de sécurité selon l'une quelconque des revendications 1 à 6 ; et
Le corps comprend un élément de liaison de siège (105) pour un ensemble siège à disposer, et un ensemble châssis de corps (106) pour supporter la charge globale ; l'ensemble de liaison d'interface (101) est relié de manière fixe à l'ensemble châssis de corps (106) et l'élément de liaison de siège (105) est relié de manière fixe au socle (121) ; et l'élément de liaison de siège (105) comporte un orifice de liaison (1051), et l'élément de fixation de siège (122) est monté dans l'orifice de liaison (1051).

8. - Kit de siège de sécurité, comprenant une base et un ensemble siège monté sur celle-ci ; dans lequel
la base est la base de siège de sécurité de la revendication 7 ; un mécanisme de liaison est disposé à la partie inférieure de l'ensemble siège, et le mécanisme de liaison comprend une tige de liaison qui coopère avec l'élément de fixation de siège (122) de la base de siège de sécurité ; et l'ensemble siège comprend un siège de sécurité et un support.

9. - Procédé de manipulation de siège de sécurité, comprenant :
configurer un ensemble siège de sécurité pour qu'il comprenne une base de siège de sécurité et un ensemble siège, l'ensemble siège étant un support et/ou un siège de sécurité ; et configurer la base de siège de sécurité pour qu'elle comprenne un dispositif de fixation de siège et un mécanisme de manipulation ; et
configurer le dispositif de fixation de siège pour qu'il comprenne en outre un socle (121) monté sur un ensemble châssis de corps de la base et un élément de fixation de siège (122) disposé sur le socle (121), et
configurer le mécanisme de manipulation pour qu'il comprenne en outre un élément d'actionnement (111) et un élément de liaison (112), l'élément de fixation de siège (122) pouvant être ouvert ou fermé pour permettre à l'ensemble siège d'y être monté ou d'en être désengagé ; et l'élément d'actionnement (111) étant disposé d'une manière déplaçable en va-et-vient pour entraîner l'ouverture ou la fermeture de l'élément de fixation de siège (122) par l'intermédiaire de l'élément de liaison (112) ; et
le socle (121) étant disposé de manière rotative, et l'ensemble de manipulation de siège (100) comprenant en outre un ensemble de commande de rotation capable de commander la rotation du socle (121) ; et l'ensemble de commande de rotation ayant un état verrouillé et un état déverrouillé, le socle (121) étant apte à tourner par rapport à un siège de fixation (123) à l'état déverrouillé, et la rotation des deux composants étant verrouillée à l'état verrouillé,
**caractérisé par le fait que** l'élément d'actionnement (111) est configuré pour comprendre un élément d'entraînement (1111), un élément entraîné (1112) et un élément de sélection de fonction (1113), de telle sorte que l'élément entraîné (1112) et l'élément d'entraînement (1111) sont actionnés ensemble lorsqu'ils sont reliés, et l'élément de sélection de fonction (1113) est disposé sur l'élément d'entraînement (1111) et a deux états réglables ; et l'élément d'entraînement est désengagé de l'élément entraîné (1112) dans un premier état et relié à l'élément entraîné (1112) dans un second état ; et
l'élément entraîné (1112) est désengagé de l'élément d'entraînement (1111) dans le premier état, et l'actionnement de l'élément d'entraînement (1111) entraîne seulement l'actionnement du premier élément de limitation (124) et ne peut pas amener l'élément de liaison (112) à se déplacer en conséquence ; et l'élément entraîné (1112) est engagé avec l'élément d'entraînement (1111) dans le second état, et l'actionnement de l'élément d'entraînement (1111) peut permettre à l'élément de liaison (112) d'être actionné ensemble.

10. - Procédé selon la revendication 9, dans lequel l'ensemble de commande de rotation est configuré pour comprendre un premier élément de limitation (124) et un deuxième élément de limitation (125) qui coopèrent l'un avec l'autre, et sont respectivement disposés sur l'ensemble châssis de corps et le socle (121) ; et la rotation du socle (121) est verrouillée lorsque les deux éléments coopèrent, tandis que le socle (121) est apte à tourner sur l'ensemble châssis de corps lorsque les deux éléments sont désengagés ; et
plusieurs desdits deuxièmes éléments de limitation (125) sont prévus et disposés de manière espacée sur le socle (121) à un angle déterminé ; et seul un premier élément de limitation (124) est prévu et disposé sur l'élément d'actionnement (111) et actionné par celui-ci.

11. - Procédé selon la revendication 10, dans lequel le premier élément de limitation (124) est configuré pour être disposé sur l'élément d'entraînement (1111) et actionné par celui-ci, l'élément de liaison (112) est relié à l'élément entraîné (1112), l'élément entraîné (1112) et le socle (121) comportent alors respectivement un troisième élément de limitation (126) et un quatrième élément de limitation (127), et l'état de fonctionnement collaboratif du premier élément de limitation (124) et du deuxième élément de limitation (125) est opposé à celui du troisième élément de limitation (126) et du quatrième élément de limitation (127) ; et
l'élément entraîné (1112) est désengagé de l'élément d'entraînement (1111) dans le premier état, et l'actionnement de l'élément d'entraînement (1111) entraîne seulement l'actionnement du premier élément de limitation (124) et ne peut pas entraîner l'actionnement de l'élément de liaison (112), ce qui permet de commander l'engagement ou le désengagement du premier élément de limitation (124) et du deuxième élément de limitation (125) ; et l'élément entraîné (1112) est engagé avec l'élément d'entraînement (1111) dans le second état, l'actionnement de l'élément d'entraînement (1111) peut permettre à l'élément de liaison (112) d'être actionné ensemble, l'état de coopération du troisième organe de limitation (126) et du quatrième élément de limitation (127) est opposé à celui du premier élément de limitation (124) et du deuxième élément de limitation (125), la rotation du socle (121) est toujours verrouillée, et le déplacement de l'élément entraîné (1112) peut seulement entraîner le déverrouillage de l'élément de fixation de siège (122).

12. - Procédé selon la revendication 11, dans lequel le quatrième élément de limitation (127) et le deuxième élément de limitation (125) sont disposés de manière opposée sur le socle (121), et le troisième élément de limitation (126) est disposé de manière correspondante sur l'élément entraîné (1112) ; par conséquent, lorsque l'élément entraîné (1112) est déplacé par rapport au socle (121), le premier élément de limitation (124) est désengagé du deuxième élément de limitation (125) et le troisième élément de limitation (126) est monté dans le quatrième élément de limitation (127), ou le premier élément de limitation (124) est monté dans le deuxième élément de limitation (125) et le troisième élément de limitation (126) est désengagé du quatrième élément de limitation (127) .

13. - Procédé selon la revendication 9, dans lequel l'élément d'actionnement (111) est disposé de manière rotative ou articulé de manière centrale afin d'entraîner l'ouverture ou la fermeture de l'élément de fixation de siège (122) par l'intermédiaire de l'élément de liaison (112).
